# EUROPÄISCHE PATENTSCHRIFT

(11) **EP 3 004 403 B1**
(45) Veröffentlichungstag und Bekanntmachung des Hinweises auf die Patenterteilung: **09.01.2019**
(21) Anmeldenummer: 14720083.6
(22) Anmeldetag: 24.04.2014
(51) Int. Cl.: C21D 9/48, C21D 1/40, H05B 3/00, H05B 6/14, C21D 9/00, C21D 1/42, C21D 1/673

(54) **TRANSPORTVORRICHTUNG FÜR HEISSE, DÜNNWANDIGE STAHLTEILE**
TRANSPORT DEVICE FOR HOT, THIN-WALLED STEEL PARTS
DISPOSITIF DE TRANSPORT POUR PIÈCES BRÛLANTES EN ACIER ET À PAROI MINCE

(30) Priorität: 28.05.2013 DE 102013105488
(43) Veröffentlichungstag der Anmeldung: 13.04.2016
(73) Patentinhaber: ThyssenKrupp Steel Europe AG, 47166 Duisburg (DE)
(72) Erfinder: SIKORA, Sascha, 44534 Lünen (DE); BANIK, Janko, 58762 Altena (DE)
(74) Vertreter: thyssenkrupp Intellectual Property GmbH
(86) Internationale Anmeldenummer: PCT/EP2014/058318
(87) Internationale Veröffentlichungsnummer: WO 2014/191142

(56) Entgegenhaltungen:
- WO-A1-2005/078144
- DE-A1- 3 102 638
- DE-A1-102009 016 027
- DE-A1-102009 026 251

## Beschreibung

Die Erfindung betrifft eine Transportvorrichtung zum Transportieren von Stahlteilen zur Warmumformung und/oder Härtung mit Transportaufnahmen, in welchen die Stahlteile angeordnet sind und welche für den Transport von Stahlteilen mit Temperaturen von mehr als 650°C ausgelegt sind. Darüber hinaus betrifft die Erfindung ein Verfahren zum Transport von Stahlteilen von einer Vorrichtung zur Erwärmung der Stahlteile zur Vorrichtung zum Härten, Warmumformen oder Presshärten der Stahlteile, wobei das Stahlteil in einem ersten Schritt in einer Vorrichtung zur Erwärmung auf eine vorbestimmte erste Temperatur oberhalb der Raumtemperatur erwärmt wird, wobei Mittel zur induktiven, konvektiven und/oder radiativen Erwärmung der Stahlteile vorgesehen sind.

Bei der Herstellung von Bauteilen aus Vergütungsstählen oder härtbaren Stählen ist die Temperaturführung innerhalb des Härtungsprozesses von großer Bedeutung und wirkt sich unmittelbar auf die erzielbaren Festigkeitssteigerungen aus. Bei Vergütungsstählen wird hier durch die Temperaturführung gezielt auf das Verhältnis von Festigkeit zu Zähigkeit Einfluss genommen, so dass bei Temperaturschwankungen auch Schwankungen der mechanischen Eigenschaften des vergüteten Stahlteils auftreten. Bei härtbaren Stählen kann über den Abkühlvorgang nach einem Erhitzen oberhalb der Austenitisierungstemperatur AC₁ Einfluss auf das Gefüge genommen werden, so dass gezielt martensitische Bereiche erzeugt werden, welche eine hohe Festigkeitssteigerung ermöglichen. Üblicherweise wird das Stahlteil zum Vergüten oder zum Härten in einer ersten Vorrichtung erwärmt und auf die gewünschte Temperatur gebracht. Anschließend wird das Stahlteil zu einer weiteren Vorrichtung transportiert, in welcher dieses über ein Härtungsmedium stark abgekühlt wird, so dass die gewünschten Gefügeänderungen im Stahlteil stattfinden. Hierzu werden Transportvorrichtungen verwendet, welche für den Transport entsprechende Temperaturen von mehr als 650 °C aufweisende Stahlteile geeignet sind. Als Materialien kommen hier nur hochtemperaturfeste Materialien, unter anderem auch Stahl, in Betracht. Ein wichtiger Aspekt beim Transport zum Härtungs- oder Warmumformwerkzeug ist, dass das Stahlteil unmittelbar dem Härtungsprozess bzw. Warmumformprozess zugeführt werden kann, ohne beispielsweise einem längeren Wiedererwärmen auf Härt- bzw. Umformtemperatur gebracht werden zu müssen. Wird die Materialtemperatur des Stahlteils beispielsweise vor dem Härtungsprozess zu niedrig, kann in diesem Fall eine vollständige bzw. maximale Härtung des Stahlteils nicht erreicht werden. Insbesondere dünnwandige Stahlteile verlieren nach dem Entnehmen aus der Vorrichtung zur Erwärmung der Stahlteile aufgrund ihrer geringeren Masse und großer Oberfläche relativ rasch an Temperatur, so dass beispielsweise schon beim Transport zwischen der Vorrichtung zum Erwärmen des Stahlteils und der Vorrichtung zum Härten des Stahlteils es zu unerwünschten Temperaturabsenkungen kommt. Erste Gefügeumwandlungen können daher beispielsweise schon vor dem gezielten Abkühlen durch das Härtemedium stattfinden, so dass anschließend die durch das Härten erreichbaren Festigkeitswerte nicht erreicht werden können. Dies gilt insbesondere auch für die härtbaren Stähle. Bei den hohen Gefügeumwandlungstemperaturen von beispielsweise mehr als 800°C ist der Temperaturverlust der Stahlteile während des Transports aufgrund des großen Temperaturunterschiedes zur umgebenden Raumluft besonders groß.

Aus der deutschen Offenlegungsschrift DE 10 2005 018 974 A1 ist beispielsweise eine Vorrichtung zum Erwärmen von elektrisch leitfähigen, unbeschichteten oder beschichteten Platinen bekannt, welche auch zum Transport der Platinen eingesetzt werden kann und bei welcher durch einen elektrischen Stromfluss eine Erwärmung des Materials während des Transports erreicht werden soll. Allerdings wurde festgestellt, dass die durch den Stromfluss erzeugte Erwärmung relativ inhomogen ist, da sie insbesondere von der Stromdichte abhängt, welche nur mit hohem Aufwand über die Fläche des Stahlteils konstant gehalten werden kann. Im Ergebnis bleibt die Prozesssicherheit zu Erzielung der maximalen Härte des gesamten Stahlteils auch in Kenntnis dieses Standes der Technik verbesserungswürdig. Eine gattungsgemäße Vorrichtung zum Transport von Stahlteilen ist beispielsweise aus der deutschen Offenlegungsschrift DE 10 2009 026 251 A1 bekannt.

Hiervon ausgehend ist es daher Aufgabe der vorliegenden Erfindung, eine Vorrichtung und ein Verfahren zum Transport von Stahlteilen zur Verfügung zu stellen, welche bzw. welches sicherstellt, dass die für die Härtung bzw. Vergütung notwendigen Temperaturen des Stahlteils prozesssicher eingehalten werden.

Gemäß einer ersten Lehre der vorliegenden Erfindung wird die oben aufgezeigte Aufgabe dadurch gelöst, dass Mittel zur induktiven, konvektiven und/oder radiativen Erwärmung der Stahlteile vorgesehen sind. Durch die Anordnung von Mitteln zur induktiven, konvektiven und/oder radiativen Erwärmung der Stahlteile, können diese spezifisch auf die gewünschte Umformtemperatur erwärmt werden oder auf der bereits vorhandenen Temperatur gehalten werden. Im Gegensatz zur Erwärmung der Stahlteile durch elektrischen Stromfluss, kann durch die Auswahl induktiver, konvektiver oder radiativer Erwärmungsmittel sichergestellt werden, dass eine großflächige und homogene Übertragung von Wärmeenergie auf die Stahlteile ermöglicht wird und damit ein konstantes Temperaturniveau im gesamten Stahlteil gehalten werden kann. Durch den großflächigen Wärmeeintrag kann das Stahlteil homogen auf einer Temperatur gehalten werden. Insbesondere können dadurch ungewollte Wärmeverluste und damit ein Absinken der Temperatur der Stahlteile verhindert werden. Als Stahlteile kommen sowohl Halbzeuge, wie beispielsweise Rohlinge, Profile, Hohlprofile, Rohre aber auch Platinen oder Bleche in Betracht.

Bevorzugt weisen diese besonders geringe Wanddicken von maximal 1,2 mm, maximal 1,0 mm, maximal 0,8 mm oder maximal 0,5 mm auf und bestehen zumindest teilweise aus einem vergütbaren oder einem härtbaren Stahl. Bei den geringen Wanddicken sind die Wärmeverluste ohne Verwendung von Erwärmungsmitteln beim Transport der Stahlteile relativ groß. Vor allem ebene Platinen, bei welchen das Oberflächen-Volumenverhältnis sehr groß ist, profitieren von der gleichmäßigen Erwärmung durch Konvektion, Induktion oder durch Strahlungswärme.

Erfindungsgemäß sind Mittel zum konvektiven, konduktiven und/oder radiativen Erwärmen der mit dem Stahlteil in Kontakt stehenden Bereiche der Transportaufnahme vorgesehen. Diese Mittel erwärmen also die Transportaufnahme und können damit den Wärmeverlust des Stahlteils, welcher durch den Kontakt des Stahlteils mit der Transportaufnahme entsteht, verringern oder sogar zu einer Erwärmung des Stahlteils an den Kontaktstellen führen. Insbesondere wird durch die Verwendung von Mitteln zum konvektiven, konduktiven und/oder radiativen Erwärmen der mit dem Stahlteil in Kontakt stehenden Bereiche der Transportaufnahme der Wärmeverlust des Stahlteils angeordnet in der Transportaufnahme minimiert.

Weiterhin erfindungsgemäß ist die Transportvorrichtung als Rohr- und/oder Rollensystem ausgebildet, wobei unterschiedlichste Erwärmungsvorrichtungen, beispielsweise Durchlauföfen oder Turmöfen als Erwärmungsvorrichtungen für die Stahlteile verwendet werden können, aus welchen die Transportvorrichtung die Stahlteile zur weiteren Verarbeitung, d.h. zur Warmumformung und/oder Härtung abtransportiert. Ein Rohrsystem unterscheidet sich vom Rollensystem dadurch, dass die Rohre, im Gegensatz zu den Rollen des Rollensystems, nicht drehbar gelagert sind. Die Übernahme der Stahlteile erfolgt dadurch, dass die Rohre des Rohrsystems beispielsweise in Aussparungen des Ausgangsbereichs eines Ofens eingreifen und ein erwärmtes Stahlteil aus dem Ofen so entnehmen können. Es ist damit noch einfacher aufgebaut als ein Rollensystem.

Erfindungsgemäß ist als Transportvorrichtung ein Rohr- und/oder Rollensystem vorgesehen, bei welchem die mit dem Stahlteil in Kontakt stehenden Rollen und/oder Rohre beheizbar sind. Ein Rohr- und/oder Rollensystem gewährt auf einfache Weise den Transport eines Stahlteils über die verwendeten Rohre und/oder Rollen, wobei über die mit dem Stahlteil in Kontakt stehenden beheizbaren Rollen und/oder Rohre zusätzlich Wärmeenergie in die Stahlteile eingebracht werden kann, so dass eine unerwünschte Temperaturabsenkung verhindert werden kann.

Auf besonders einfache Art und Weise können beheizbare Rollen und/oder Rohre dadurch zur Verfügung gestellt werden, dass gemäß einer weiteren Ausgestaltung die Rollen und/oder Rohre unter Verwendung eines Mediums und/oder elektrisch beheizbar sind. Elektrisch beheizbare Rollen eines Rollensystems bzw. Rohre eines Rohrsystems müssen lediglich mit elektrischen Heizelementen ausgestattet werden, um entsprechend temperierte Rollen und/oder Rohre bereitzustellen. Allerdings ist auch durch Zuführung von heißen Medien, beispielsweise einem auf hohe Temperaturen erwärmten, beispielsweise inerten Gases, eine einfache Beheizung der Rollen und/oder Rohre denkbar. Denkbar ist auch die Verwendung von Abluft aus der Erwärmungsvorrichtung als heißes Medium zur Rohr- und/oder Rollenbeheizung.

Vorteilhaft ausgestaltet werden kann die Transportvorrichtung dadurch, dass die Transportaufnahme mehrere Heizkreise aufweisen, welche getrennt von einander angesteuert werden können. Durch die getrennt ansteuerbaren Heizkreise der Transportaufnahme, welche beispielsweise rollenweise getrennte elektrische Heizelemente oder Anschlüsse für heiße Medien aufweisen, kann zusätzlich Energie eingespart werden, in dem lediglich nur die mit dem Stahlteil aktuell in Kontakt stehenden Bereiche der Transportaufnahme mit Wärmeenergie beaufschlagt werden.

Ferner kann die Transportvorrichtung dadurch vorteilhaft ausgestaltet werden, dass als Mittel zur Erwärmung der Stahlteile elektromagnetische Heizstrahler zur radiativen Erwärmung, heiße Medien führende Gewerke oder Gebläse zur konvektiven Erwärmung oder Induktionsspulen zur induktiven Erwärmung vorgesehen sind. Allen Erwärmungsmitteln ist gemein, dass diese die Stahlteile kontaktlos über einen großflächigen Bereich erwärmen können und damit zu einer homogenen Erwärmung der Stahlteile führen.

Schließlich wird die Transportvorrichtung dadurch vorteilhaft ausgestaltet, dass die Transportaufnahmen offen ausgebildet sind. Offen im Sinne der vorliegenden Erfindung bedeutet, dass die Transportaufnahmen keine Einhausung aufweisen, welche das Handling der erhitzten Stahlteile erschweren würde. Insbesondere kann hierdurch der Transport der Stahlteile ohne zusätzliche Hilfsmittel optisch verfolgt werden. Darüber hinaus wird durch die offene Bauweise der Transportaufnahmen erreicht, dass es nicht zu Inhomogenitäten in Bezug auf die Erwärmung der Stahlteile kommt. Wärmestaus werden durch die offene Bauweise prinzipiell vermieden.

Gemäß einer weiteren Lehre der vorliegenden Erfindung wird die oben aufgezeigte Aufgabe durch ein Verfahren zum Transport von Stahlteilen dadurch gelöst, dass während des Transports der Stahlteile zur Vorrichtung zum Härten, Warmumformen oder Presshärten die Temperatur des Stahlteils unter Verwendung von Mitteln zum konvektiven, induktiven oder radiativen Erwärmen des Stahlteils zumindest konstant gehalten wird. Wie bereits zuvor ausgeführt, können die Stahlteile in der Transportvorrichtung hierdurch großflächig und homogen mit Wärmeenergie beaufschlagt werden, so dass die Temperatur des Stahlteils homogen konstant gehalten werden kann. Im Ergebnis kann der Härtungsvorgang bzw. das Warmumformen oder Presshärten des Stahlteils prozesssicher mit der maximalen Festigkeitssteigerung durchgeführt werden. Durch diese Maßnahme können darüber hinaus auch längere Transportwege zwischen der Vorrichtung zur Erwärmung der Stahlteile und dem entsprechenden Härtungswerkzeug bzw. Warmumform- oder Presshärte-Werkzeug realisiert werden, ohne dass es zu einer unerwünschten Temperaturabsenkung des Stahlteils kommt. Erfindungsgemäß erfolgt der Transport der Stahlteile unter Verwendung eines Rollensystems, wobei die die Stahlteile aufnehmenden Transportaufnahmen durch Mittel zur konvektiven, konduktiven und/oder radiativen Erwärmung erwärmt werden, können Stahlteile aus beliebigen Öfen, Durchlauföfen oder beispielsweise Turmöfen, entnommen werden und den weiteren Umform- oder Härtungsschritten auch bei längeren Transportwegen zugeführt werden, ohne dass es zu unerwünschten Wärmeverlusten kommt. Durch die Beheizung der Transportaufnahmen wird ein minimaler Wärmeverlust durch den Kontakt mit den Transportaufnahmen gewährleistet und damit das Einhalten der notwendigen Temperatur erleichtert.

Gemäß einer weiteren Ausgestaltung des erfindungsgemäßen Verfahrens wird die Temperatur des Stahlteils während des Transports weiter erhöht. Hierdurch besteht die Möglichkeit, die Stahlteile zunächst nicht auf die volle Umformtemperatur zu erwärmen und damit den Wärmeverlust während des Transports niedriger zu halten. Am Ende des Transports weisen die Stahlteile dann eine erhöhte Temperatur auf, welche dann beispielsweise der Umform- bzw. Härtetemperatur entsprechen kann. Hierdurch kann ebenfalls die Prozesssicherheit des Warmumformvorgangs bzw. Presshärtens oder Härtens verbessert werden, da beispielsweise auch Wärmeverluste beim Einlegen des Stahlteils ins Härte- und/oder Presswerkzeug berücksichtigt werden können.

Besonders bevorzugt wird das erfindungsgemäße Verfahren mit Stahlteilen ausgeführt, deren Wanddicke maximal 1,2 mm, maximal 1,0 mm, maximal 0,8 mm oder maximal 0,5 mm beträgt. Bei den genannten, geringen Wanddicken der Stahlteile ist der Wärmeverlust bei den entsprechend hohen Temperaturen, beispielsweise bei einer Temperatur von 950°C gegenüber der Raumtemperatur besonders groß, so dass ohne das erfindungsgemäße Verfahren die Temperatur des Stahlteils schnell absinkt und sich Gefügeumwandlungen einstellen, welche zu diesem Zeitpunkt nicht gewünscht sind.

Erfindungsgemäß erfolgt die Zufuhr von Wärmeenergie durch Kontakt mit beheizbaren Rollen des Rollensystems bzw. Rohre des Rohrsystems, welche unter Verwendung heißer Medien und/oder durch elektrischen Strom beheizt werden, so dass auf einfache Weise die Transportaufnahme der Transportvorrichtung beheizt wird, so dass der Wärmeverlust der Stahlteile beim Transport mit dem Rohr- und/oder Rollensystem verringert wird.

Eine Energieeinsparung kann gemäß einer weiteren Ausgestaltung dadurch erreicht werden, dass bei einem Rohr- und/oder Rollensystem die beheizbaren Rohre und/oder Rollen eine Mehrzahl an Heizkreisen aufweisen und einzelne Heizkreise beim Transport angesteuert werden können. Einzelne Heizkreise können entweder elektrisch oder beispielsweise auch mit heißen Medien gebildet werden, so dass beispielsweise eine Erwärmung lediglich der Rohre und/oder Rollen erfolgt, welche unmittelbar mit dem Stahlteil in Kontakt stehen.

Schließlich ist das erfindungsgemäße Verfahren insbesondere dann vorteilhaft, wenn die Temperatur des Stahlteils während des Transports auf mindestens 750°C, vorzugsweise auf mindestens 800°C gehalten oder erhöht wird. Bei diesen hohen Temperaturen ist der Wärmeverlust der Stahlteile, insbesondere dünnwandiger Stahlteile besonders hoch, so dass das erfindungsgemäße Verfahren besonders effektiv die Prozesssicherheit erhöht.

Im Weiteren soll die Erfindung anhand von Ausführungsbeispielen in Verbindung mit der Zeichnung näher erläutert werden. Die Zeichnung zeigt in
- Fig. 1: in einer schematischen Darstellung den vollständigen Verfahrensablauf beispielsweise beim Warmumformen von Stahlteilen,
- Fig. 2a, b: in einer perspektivischen, schematischen Darstellung der Transportaufnahmen einer Transportvorrichtung und
- Fig. 3a, b: zwei weitere Ausführungsbeispiele in einer schematischen, perspektivischen Darstellung der Transportaufnahmen einer Transportvorrichtung.

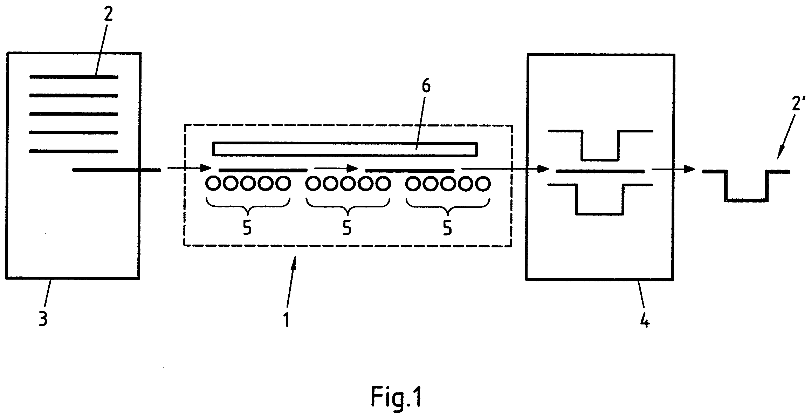

Fig. 1 zeigt zunächst eine schematische Darstellung eines Verfahrens zur Warmumformung oder Härten von Stahlteilen 2, welche durch eine Transportvorrichtung 1 aus einem Ofen 3 zu einem Werkzeug 4 zum Presshärten oder Warmumformen transportiert werden. In der Transportvorrichtung, welche - wie durch die gestrichelten Linien angedeutet - offen ausgebildet ist, ist ein Rollensystem mit einzelnen Transportaufnahmen 5 mit einer Mehrzahl an Rollen vorgesehen. Darüber hinaus sind Mittel 6 zur konvektiven, induktiven oder radiativen Erwärmung vorgesehen, welche die Stahlteile 2 auf Temperatur während des Transports halten. Durch Auswahl einer kontaktlosen induktiven, radiativen und/oder konvektiven Erwärmung ist es möglich, auf einfache Weise eine homogene Erwärmung des Stahlteils 2 zu erreichen, so dass die Umformung im Werkzeug 4 prozesssicher mit der gewünschten Umformtemperatur durchgeführt werden kann. Das umgeformte Stahlteil 2' weist dann die gewünschte Festigkeit im gesamten Stahlteil auf.

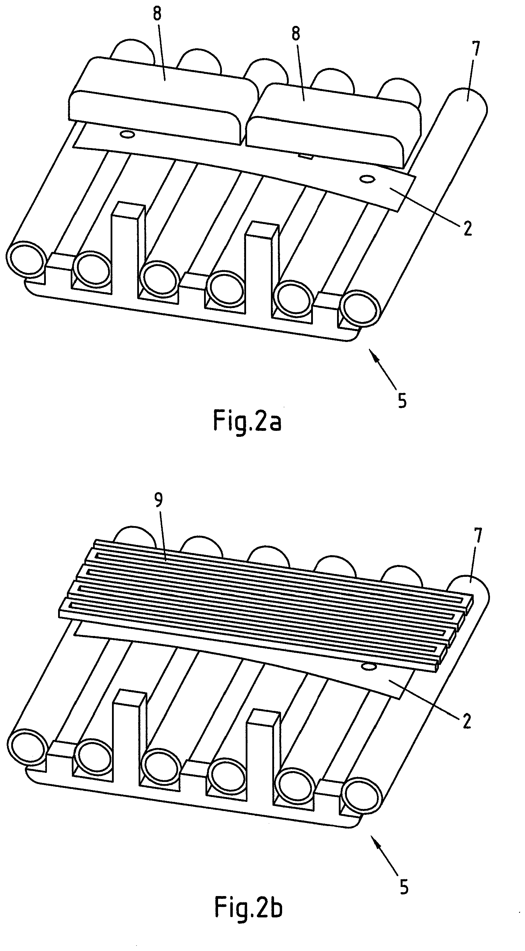

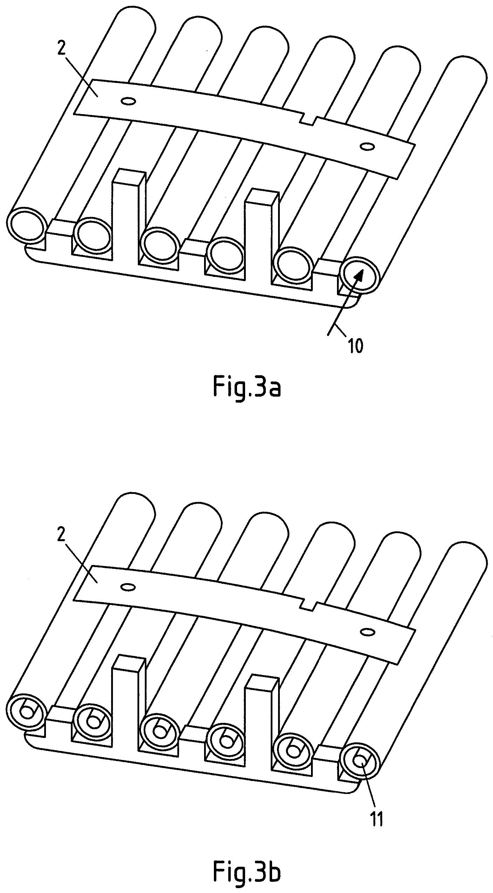

In den Ausführungsbeispielen sind in den Fig. 2a, b sowie Fig. 3a, b die Transportaufnahmen 5 eines Rollensystems und/oder Rohrsystems dargestellt, welche hier exemplarisch für die Transportaufnahmen beliebiger Transportvorrichtungen 1, beispielsweise von Robotern oder linearen Transfervorrichtungen beschrieben werden. Anstelle der Rollen eines Rollensystems bzw. Rohre eines Rohrsystems, wie in den Fig. 1, 2 und 3 dargestellt, können daher auch beliebige andere Transportaufnahmen verwendet werden, beispielsweise einfache Aufnahmen oder Ablagen für die Stahlteile, welche dann über Roboter oder lineare Transfervorrichtungen transportiert werden.

Fig. 2a, b zeigen nun in perspektivischer Darstellung die Transportaufnahme 5 einer nicht dargestellten Transportvorrichtung in Form eines Rollensystems und/oder Rohrsystems, welche Stahlteile 2 von einem Ofen 3 zu einer Vorrichtung 4 zum Warmumformen bzw. Härten der Stahlteile transportiert werden. Die Transportaufnahme 5 ist Teil eines Rollensystems und/oder Rohrsystems und weist eine Mehrzahl an Rollen und/oder Rohre 7 auf. Darüber hinaus ist in Fig. 2a und in Fig. 2b jeweils ein Mittel zum Erwärmen des Stahlteils 2 in Form eines Infrarotstrahlers oder einer Heißluftzuführung 8 oder in Form von Induktionsspulen 9 (Fig. 2b) dargestellt. Infrarotstrahler 8 bzw. Induktionsspulen 9 sind Mittel zur radiativen Erwärmung der Stahlteile 2 und können die Stahlteile 2 großflächig mit Wärmeenergie beaufschlagen, so dass diese die Temperatur, auf welche die Stahlteile 2 zuvor im Ofen erhitzt worden sind, homogen beibehalten. Anstelle des Heizstrahlers 8 kann auch ein Heißluftgebläse oder eine einfache Zuführung von heißer Luft bzw. eines heißen Mediums vorgesehen sein, so dass durch Konvektion die Stahlteile 2 auf Temperatur gebracht werden bzw. auf dieser gehalten werden. Als heißes Medium kann beispielsweise auch Abwärme eines Ofens zur Erwärmung der Stahlteile 2 verwendet werden. Besonders vorteilhaft ist es, wenn die Stahlteile in der Transportaufnahme 5 auf Warmumformtemperatur erwärmt werden, da so der Wärmeverlust während des Transports verringert wird. Wie anhand der Fig. 2a und Fig. 2b erkennbar ist, sind die Transportaufnahmen der Transportvorrichtung offen ausgestaltet und weisen keine Einhausung auf. Damit bleiben die Stahlteile während des Transports zugänglich und ein Temperaturstau kann hierdurch vermieden werden.

Eine weitere Verringerung des Wärmeverlustes während des Transports der Stahlteile 2, welche maximal 1,2 mm, maximal 1,0 insbesondere maximal 0,8 mm und besonders bevorzugt maximal 0,5 mm Wanddicke aufweisen, wird dadurch erreicht, dass wie in Fig. 3 dargestellt, die Rollen und/oder Rohre 7 beheizt werden. Hierzu werden, wie Fig. 3a andeutet, erwärmte Medien 10 oder beispielsweise ein heißes Gas 6 zur Rohr- und/oder Rollenbeheizung verwendet. Das Ausführungsbeispiel einer beheizten Transportaufnahme 5 aus Fig. 3b weist elektrische Heizelemente 11 auf, welche in den Rollen und/oder Rohre vorgesehen sind und welche unter Verwendung von elektrischem Strom eine Beheizung der Rolle und/oder Rohre 7 gewährleisten. Der Kontakt der Transportaufnahmen 5 mit dem Stahlteil 2 führt beim Beheizen der Transportaufnahmebereiche, die mit dem Stahlteil in Kontakt stehen, zu weiter verringerten Wärmeverlusten. Die Rohr- und/oder Rollensysteme sind, wie bereits eingangs ausgeführt, aus einem Material hergestellt, welches zur Erwärmung auf Temperaturen von mehr als 650°C ausgelegt ist, also beispielsweise aus Stahl. Insbesondere bei der Warmumformung von härtbaren Stählen weisen die Stahlteile nämlich Temperaturen von mehr als 750°C, bevorzugt mehr als 800°C auf.

## Patentansprüche

1. Transportvorrichtung (1) zum Transportieren von Stahlteilen (2) zur Warmumformung und/oder Härtung mit Transportaufnahmen (5), in welchen die Stahlteile (2) angeordnet sind und welche für den Transport von Stahlteilen (2) mit Temperaturen von mehr als 650°C ausgelegt sind, wobei Mittel (6,8,9) zur induktiven, konvektiven und/oder radiativen Erwärmung der Stahlteile (2) vorgesehen sind, wobei Mittel (10,11) zum konvektiven, konduktiven und/oder radiativen Erwärmen der mit dem Stahlteil (2) in Kontakt stehenden Bereiche der Transportaufnahme (5) vorgesehen sind und die Transportvorrichtung (1) als Rohr- und/oder Rollensystem ausgebildet ist,
**dadurch gekennzeichnet, dass**
ein Rollensystem (1) und/oder Rohrsystems vorgesehen ist und die mit dem Stahlteil (2) in Kontakt stehenden Rollen und/oder Rohre (7) unter Verwendung heißer Medien oder durch elektrischen Strom beheizbar sind.

2. Transportvorrichtung nach Anspruch 1,
**dadurch gekennzeichnet, dass**
die Rollen und/oder Rohre (7) unter Verwendung eines Mediums (10) beheizbar sind und/oder elektrisch beheizbar sind.

3. Transportvorrichtung nach einem der Ansprüche 1 bis 2,
**dadurch gekennzeichnet, dass**
die Transportaufnahme (5) mehrere Heizkreise aufweist, welche getrennt voneinander angesteuert werden können.

4. Transportvorrichtung nach einem der Ansprüche 1 bis 3,
**dadurch gekennzeichnet, dass**
als Mittel zur Erwärmung der Stahlteile elektromagnetische Heizstrahler (8) zur radiativen Erwärmung, heiße Medien führende Gebläse zur konvektiven Erwärmung oder Induktionsspulen (9) zur induktiven Erwärmung vorgesehen sind.

5. Transportvorrichtung nach einem der Ansprüche 1 bis 4,
**dadurch gekennzeichnet, dass**
die Transportvorrichtung (1) und die Transportaufnahme (5) offen ausgebildet sind.

6. Verfahren zum Transport von Stahlteilen von einer Vorrichtung (3) zur Erwärmung der Stahlteile (2) zur Vorrichtung (4) zum Härten, Warmumformen, Presshärten der Stahlteile unter Verwendung einer Vorrichtung nach einem der Ansprüche 1 bis 5, wobei das Stahlteil in einem ersten Schritt in einer Vorrichtung zur Erwärmung auf eine vorbestimmte erste Temperatur oberhalb der Raumtemperatur erwärmt wird, wobei während des Transports zur Vorrichtung (4) zum Härten, Warmumformen oder Presshärten die Temperatur des Stahlteils (2) unter Verwendung von Mittel (6,8,9) zum konvektiven, induktiven oder radiativen Erwärmen des Stahlteils zumindest konstant gehalten wird, wobei das Stahlteil unter Verwendung eines Rollensystems (1) und/oder Rohrsystems transportiert wird, wobei die die Stahlteile (2) aufnehmenden Transportaufnahmen (5) durch Mittel (10,11) zur konvektiven, konduktiven und/oder radiativen Erwärmung erwärmt werden,
**dadurch gekennzeichnet, dass**
die Zufuhr von Wärmeenergie durch Kontakt mit beheizbaren Rollen und/oder Rohre (7) des Rohr- und/oder Rollensystems (1) erfolgt, welche unter Verwendung heißer Medien oder durch elektrischen Strom beheizt werden.

7. Verfahren nach Anspruch 6,
**dadurch gekennzeichnet, dass**
die Temperatur des Stahlteils (2) während des Transports weiter erhöht wird.

8. Verfahren nach Anspruch 6 oder 7,
**dadurch gekennzeichnet, dass**
die Wanddicke des Stahlteils (2) maximal 1,2 mm, maximal 1,0 mm, maximal 0,8 mm oder maximal 0,5 mm beträgt.

9. Verfahren nach einem der Ansprüche 6 bis 8,
**dadurch gekennzeichnet, dass**
die Temperatur des Stahlteils (2) während des Transports auf mindestens 750°C, vorzugsweise mindestens 800 °C gehalten oder erhöht wird.

10. Verfahren nach einem der Ansprüche 6 bis 9,
**dadurch gekennzeichnet, dass**
die beheizbaren Rollen und/oder Rohre (7) eine Mehrzahl an Heizkreisen aufweisen und einzelne Heizkreise beim Transport angesteuert werden.

## Claims

1. Conveying device (1) for conveying steel parts (2) for hot forming and/or hardening, having conveying receptacles (5) in which the steel parts (2) are disposed and which are specified for conveying steel parts (2) having temperatures of more than 650°C, wherein means (6, 8, 9) for heating the steel parts (2) by induction, convection, and/or radiation are provided, wherein means (10, 11) for heating the regions of the conveying receptacle (5) which are in contact with the steel part (2) by convection, conduction and/or radiation are provided and the conveying device (1) is configured as a tube and/or roller system, **characterized in that** a roller system (1) and/or tube system is provided and that the rollers and/or tubes (7) which are in contact with the steel part (2) are heatable using hot media or by an electric current.

2. Conveying device according to Claim 1, **characterized in that** the rollers and/or tubes (7) are heatable using a medium (10) and/or are electrically heatable.

3. Conveying device according to one of Claims 1 to 2, **characterized in that** the conveying receptacle (5) has a plurality of heating circuits which may be actuated separately from one another.

4. Conveying device according to one of Claims 1 to 3, **characterized in that** electromagnetic heating radiators (8) for heating by radiation, blowers carrying hot media for heating by convection, or induction coils (9) for heating by induction are provided as means for heating the steel parts.

5. Conveying device according to one of Claims 1 to 4, **characterized in that** the conveying device (1) and the conveying receptacle (5) are configured so as to be open.

6. Method for conveying steel parts from a device (3) for heating the steel parts (2) to a device (4) for hardening, hot forming, or press hardening the steel parts, using a device according to one of Claims 1 to 5, wherein the steel part in a first step in a device for heating is heated to a predetermined first temperature which is above room temperature, wherein the temperature of the steel part (2), using means (6, 8, 9) for heating the steel part by convection, induction, or radiation, is at least kept constant during conveying to the device (4) for hardening, hot forming, or press hardening, wherein the steel part is conveyed using a roller system (1) and/or tube system, wherein the conveying receptacles (5) which receive the steel parts (2) are heated by means (10, 11) for heating by convection, conduction, and/or radiation, **characterized in that** the supply of heating energy is performed by way of contact with heatable rollers and/or tubes (7) of the tube and/or roller system (1), which are heated using hot media or by an electric current.

7. Method according to Claim 6, **characterized in that** the temperature of the steel part (2) is further increased during conveying.

8. Method according to Claim 6 or 7, **characterized in that** the wall thickness of the steel part (2) is maximum 1.2 mm, maximum 1.0 mm, maximum 0.8 mm, or maximum 0.5 mm.

9. Method according to one of Claims 6 to 8, **characterized in that** the temperature of the steel part (2) during conveying is kept at or increased to at least 750°C, preferably at least 800°C.

10. Method according to one of Claims 6 to 9, **characterized in that** the heatable rollers and/or tubes (7) have a plurality of heating circuits and during conveying individual heating circuits are actuated.

## Revendications

1. Dispositif de transport (1) destiné au transport de pièces en acier (2) destinées au formage à chaud et/ou à la trempe, le dispositif comprenant des réceptacles de transport (5) dans lesquels les pièces en acier (2) sont disposées et qui sont conçus pour transporter des pièces en acier (2) à des températures supérieures à 650 °C,
des moyens (6, 8, 9) étant prévus pour chauffer des pièces en acier (2) par induction, convection et/ou radiation,
des moyens (10, 11) étant prévus pour chauffer par convection, conduction et/ou par radiation des zones du réceptacles de transport (5) qui sont en contact avec la pièce en acier (2) et le dispositif de transport (1) étant conçu comme un système de tubes et/ou de rouleaux,
**caractérisé en ce que**
un système de rouleaux (1) et/ou un système de tubes est prévu et les rouleaux et/ou les tubes (7) en contact avec la pièce en acier (2) peuvent être chauffés à l'aide de milieux chauds ou d'un courant électrique.

2. Dispositif de transport selon la revendication 1,
**caractérisé en ce que**
les rouleaux et/ou les tubes (7) peuvent être chauffés à l'aide d'un milieu (10) et/ou peuvent être chauffés électriquement.

3. Dispositif de transport selon l'une des revendications 1 à 2, **caractérisé en ce que** le réceptacle de transport (5) comporte une pluralité de circuits de chauffage qui peuvent être commandés séparément les uns des autres.

4. Dispositif de transport selon l'une des revendications 1 à 3,
**caractérisé en ce que**
des dispositifs de chauffage par rayonnement électromagnétiques (8) pour le chauffage par radiation et des soufflantes de guidage de milieux chauds pour le chauffage par convection ou par induction (9) sont prévus comme moyens de chauffage des pièces en acier.

5. Dispositif de transport selon l'une des revendications 1 à 4, **caractérisé en ce que** le dispositif de transport (1) et le réceptacle de transport (5) sont conçus pour être ouverts.

6. Procédé de transport de pièces en acier depuis un dispositif (3) destiné au chauffage des pièces en acier (2) vers le dispositif (4) destiné à la trempe, la mise en forme à chaud, la trempe sous presse des pièces en acier à l'aide d'un dispositif selon l'une des revendications 1 à 5, la pièce en acier étant chauffée dans une première étape dans un dispositif de chauffage à une première température prédéterminée supérieure à la température ambiante, la température de la pièce en acier (2) étant maintenue au moins constante pendant le transport vers le dispositif (4) de trempe, de mise en forme à chaud ou de trempe sous presse à l'aide de moyens (6, 8, 9) de chauffage de la pièce en acier par convection, induction ou radiation ; la pièce en acier étant transportée à l'aide d'un système de rouleaux (1) et/ou d'un système de tubes, les réceptacles de transport (5) qui reçoivent les pièces en acier (2) étant chauffés par des moyens (10, 11) de chauffage par convection, conduction et/ou radiation,
**caractérisé en ce que**
l'apport d'énergie calorifique est effectué par contact avec des rouleaux et/ou des tubes (7), pouvant être chauffés, du système de tubes et/ou de rouleaux (1), lesquels sont chauffés à l'aide de milieux chauds ou d'un courant électrique.

7. Procédé selon la revendication 6,
**caractérisé en ce que**
la température de la pièce en acier (2) est encore augmentée pendant le transport.

8. Procédé selon la revendication 6 ou 7,
**caractérisé en ce que**
l'épaisseur de paroi de la pièce en acier (2) est au maximum de 1,2 mm, au maximum de 1,0 mm, au maximum de 0,8 mm et au maximum de 0,5 mm.

9. Procédé selon l'une des revendications 6 à 8,
**caractérisé en ce que**
la température de la pièce en acier (2) est maintenue ou augmentée pendant le transport à au moins 750 °C, de préférence au moins 800 °C.

10. Procédé selon l'une des revendications 6 à 9,
**caractérisé en ce que**
les rouleaux et/ou tubes (7) pouvant être chauffés comportent une pluralité de circuits de chauffage et des circuits de chauffage individuels sont commandés pendant le transport.
